# EUROPÄISCHE PATENTANMELDUNG

(11) **EP 1 746 070 A1**
(43) Veröffentlichungstag der Anmeldung: **24.01.2007**
(21) Anmeldenummer: 05015613.2
(22) Anmeldetag: 19.07.2005
(51) Int. Cl.: B67D 5/08, G01F 25/00

(54) **Verfahren zur Messung des Abgabevolumens fluider Medien**

(71) Anmelder: Scheidt & Bachmann Gesellschaft mit beschränkter Haftung, 41238 Mönchengladbach (DE)
(72) Erfinder: Miller, Dr. Norbert, 41063 Mönchengladbach (DE); Dahlmanns, Dipl.-Ing. Christoph, 52511 Geilenkirchen (DE)
(74) Vertreter: Stenger, Watzke & Ring

(57) **Zusammenfassung**

Die vorliegende Erfindung betrifft ein Verfahren zur Messung von mittels Zapfanlagen geförderter Volumina eines vorzugsweise fluiden Mediums, insbesondere zur Messung von einer Zapfsäule einer Tankstelle entnommener Kraftstoffvolumina, bei dem mit einer eine Meßabweichung aufweisenden Meßeinheit erfaßte Volumendaten einer mittels der Zapfanlage geförderten Mediumsmenge an eine Rechnereinheit (6) geleitet werden, in der anhand dieser Volumendaten ein Näherungswert des geförderten Mediumsvolumen berechnet wird und zum Ausgleich der Abweichung zwischen dem tatsächlich geförderten Mediumsvolumen und dem berechneten Näherungswert dieser mit einem durch eine Eichmessung bestimmten Korrekturfaktor (KF) versehen wird.

## Beschreibung

Die vorliegende Erfindung betrifft ein Verfahren zur Messung von mittels Zapfanlagen geförderter Volumina eines vorzugsweise fluiden Mediums, insbesondere zur Messung von einer Zapfsäule einer Tankstelle entnommener Kraftstoffvolumina, bei dem mit einer eine Meßabweichung aufweisenden Meßeinheit erfaßte Volumendaten einer mittels der Zapfanlage geförderten Mediumsmenge an eine Rechnereinheit geleitet werden, in der anhand dieser Volumendaten ein Näherungswert des geförderten Mediumsvolumen berechnet wird und zum Ausgleich der Abweichung zwischen dem tatsächlich geförderten Mediumsvolumen und dem berechneten Näherungswert dieser mit einem durch eine Eichmessung bestimmten Korrekturfaktor versehen wird.

Verfahren zur Messung von mittels Zapfanlagen geförderter Volumina eines vorzugsweise fluiden Mediums sind aus dem Stand der Technik beispielsweise im Rahmen der Abgabe flüssiger Kraftstoffe an Tankstellen bekannt. Dort sind meist mehrere Zapfsäulen vorgesehen, an denen ein Kunde unterschiedliche Kraftstoffsorten tanken können. Zu diesem Zweck ist jede der Zapfsäulen mit mindestens einer Pumpe für jede Kraftstoffsorte ausgestattet. Um die Menge des abgegebenen Kraftstoffs zu messen, ist jeder Pumpe mindestens eine Meßeinheit beispielsweise in Form eines Kolbenmessers oder eines Spindelmessers zugeordnet.

Zur Messung der mittels der Zapfanlagen geförderten Kraftstoffmenge treibt jede Meßeinheit einen Impulsgeber an, dessen Impulse einer Rechnereinheit zur Berechnung der geförderten Kraftstoffmenge und des zugehörigen Preises zugeführt werden. Für eine korrekte Bestimmung des vom Kunden zu zahlenden Preises ist es notwendig, daß die mittels der Rechnereinheit auf Basis der Messung der Meßeinheit berechnete Kraftstoffmenge der tatsächlich geförderten Kraftstoffmenge entspricht.

Für eine möglichst genaue Bestimmung der geförderten Kraftstoffmenge bietet sich eine Volumenmessung unter Verwendung eines Spindelmessers an, da diese sehr genau mit einer nur geringen Abweichung arbeiten. Nachteiligerweise reagieren Spindelmesser allerdings äußerst anfällig auf Verschmutzungen oder Ablagerungen im Kraftstoff und führen dann zu unkorrekten Meßergebnissen. Um dieses zu vermeiden, sind bei der Verwendung von Spindelmessern zusätzliche Feinfilter vorzusehen, die einen einwandfreien Betrieb des Spindelmessers ermöglichen. Nachteiligerweise führt die Verwendung solcher Filter zu erhöhten Kosten bei der Herstellung und dem Betrieb von Tankanlagen und zieht darüber hinaus einen gesteigerten Wartungsbedarf nach sich.

Eine Verwendung von Kolbenmessern kann die zuvor geschilderte Problematik entschärfen, da Kolbenmesser sehr robust und schmutzunempfindlich sind und daher ohne zusätzliche Feinfilter verwendet werden können. Nachteiligerweise weisen Kolbenmesser einen größeren Meßfehler als Spindelmesser auf. Dieser Meßfehler beruht auf unvermeidbaren Toleranzen bei der Herstellung der Kolbenmesser, die zu Abweichungen zwischen dem tatsächlich abgegebenen Kraftstoffvolumen und dem berechneten Näherungswert führen.

Nachteiligerweise weisen aus dem Stand der Technik bekannte Meßeinheiten Meßfehler auf, welche zu einer Meßabweichung des gemessenen Volumenstroms vom tatsächlich geförderten Volumenstrom führen. Um diese Meßabweichung zu korrigieren, ist es aus dem Stand der Technik bekannt, Meßabweichungen aufgrund von Fehlern der Meßeinheiten durch einen Korrekturfaktor bei der Ermittlung der abgegebenen Kraftstoffmenge und des zugehörigen Preises zu korrigieren. Zu diesem Zweck wird die Meßeinheit einer Vorprüfung unterzogen, die z. B. von Seiten eines Herstellers von Tankanlagen vor deren Auslieferung durchgeführt wird. Bei der Vorprüfung wird auf einem Prüfstand für jede Meßeinheit ein Korrekturfaktor für einen ausgewählten Arbeitspunkt der Tankanlage bei einem mittleren Volumenstrom des Kraftstoffes ermittelt. Dieser Korrekturfaktor wird in der Rechnereinheit gespeichert und bei einem nachfolgenden Einsatz der Tankanlage bei der Berechnung der geförderten Kraftstoffmengen und der zugehörigen Preise verwendet, um die Abweichungen der tatsächlich geförderten Kraftstoffmenge von dem unkorrigierten, berechneten Näherungswert zu minimieren bzw. zu eliminieren.

Nachteiligerweise hat sich herausgestellt, daß die Meßabweichung von Meßeinheiten bei unterschiedlichen Mediumsvolumenströmen nicht konstant ist, sondern sich in Abhängigkeit des Volumenstroms verändert. Unter dem Volumenstrom im Sinne der Erfindung wird das in einem bestimmten Zeitinterval geförderte Mediumsvolumen verstanden, also die zeitliche Ableitung des Mediumsvolumen. Insbesondere bei geringen und sehr großen Volumenströmen liegt eine größere Meßabweichung vor. Da der im Rahmen der Vorprüfung der Meßeinheit ermittelte Korrekturfaktor für einen ausgewählten Arbeitspunkt mit einem mittlerem Mediumsvolumenstrom bestimmt wurde, führt die im Bereich niedriger und hoher Volumenströme, d. h. Tankgeschwindigkeiten, vorliegende größere Meßabweichung zu einer Minderabgabe von Kraftstoff bei diesen Tankgeschwindigkeiten. In Abhängigkeit von der jeweiligen Geometrie des Tankeinfüllstutzens sowohl der Tankanlage als auch des zu befüllenden Kraftstofftankes ist eine Betankung von Fahrzeugen mit unterschiedlichen, zum Teil vom während der Vorprüfung verwendeten Arbeitspunkt abweichenden Volumenströmen nicht zu vermeiden.

Ausgehend von diesem Stand der Technik liegt der vorliegenden Erfindung die **Aufgabe** zugrunde, ein Verfahren nach dem Oberbegriff des Anspruchs 1 derart zu verbessern, daß eine genaue Bestimmung des geförderten Mediumvolumens unabhängig von der Abgabegeschwindigkeit, d. h. vom Mediumsvolumenstrom, erfolgt, so daß insbesondere bei niedrigen sowie hohen Abgabegeschwindigkeiten eine korrekte Bestimmung des abgegebenen Mediumvolumens möglich ist.

Diese Aufgabe wird durch ein Verfahren zur Messung des Abgabevolumens eines vorzugsweise flüssigen Mediums in automatischen Zapfanlagen nach dem Oberbegriff des Anspruchs 1 g e l ö s t , bei dem zur Korrektur der Abweichung zwischen dem tatsächlich geförderten Mediumsvolumen und dem berechneten Näherungswert volumenstromspezifische Korrekturfaktoren in Abhängigkeit vom jeweils vorliegenden Volumenstrom des Mediums verwendet werden.

Das erfindungsgemäße Verfahren eignet sich insbesondere zur Messung des Abgabevolumens von Kraftstoff an Tankstellen. Das Verfahren ist allerdings zur genauen Messung geförderter Volumina eines beliebigen Mediums geeignet, in Frage kommen auch gasförmige Medien, sowohl Kompressible als auch Inkompressible, sowie Schüttgüter. Durch die Verwendung von volumenstromspezifischen Korrekturfaktoren besteht in vorteilhafter Weise die Möglichkeit, Meßabweichungen der Meßeinheit, die von der bei der Förderung des Mediums vorliegenden Größe des Volumenstroms abhängen, derart zu korrigieren, daß unabhängig vom jeweils vorliegenden Volumenstrom oder von Volumenstromschwankungen eine korrekte Bestimmung des tatsächlich geförderten Volumens ermöglicht wird.

Der bei der Berechnung des geförderten Volumens verwendete Korrekturfaktor wird vorzugsweise in einer Datenbankstruktur hinterlegt. In dieser Datenbankstruktur ist der Korrekturfaktor als eine Funktion des Volumenstroms möglichen Volumenströmen der Zapfanlage zugeordnet. Die das geförderte Volumen des Mediums berechnende Rechnereinheit bestimmt beispielsweise anhand der von der Meßeinheit empfangenen Volumendaten den jeweils vorliegenden Volumenstrom und greift in Abhängigkeit von diesem auf den entsprechenden Korrekturfaktor zu. Dabei kann eine Echtzeitbestimmung des jeweils vorliegenden Volumenstroms vorgesehen sein, so daß bei der Berechnung der Fördermenge des Mediums der dem jeweils tatsächlich vorliegenden Volumenstrom zugeordnete Korrekturfaktor verwendet wird.

Nach einer besonderen Ausführungsform werden die volumenstromspezifischen Korrekturfaktoren während der Vorprüfung der Messeinheit ermittelt, indem für willkürlich ausgewählte Volumenströme (Stützvolumenströme) eines Volumenstromintervalls je ein Korrekturfaktor ermittelt wird. Die bei der Vorprüfung verwendeten Stützvolumenströme bilden bei der Ermittlung der Korrekturfaktoren Stützstellen aus, so daß die Korrekturfaktoren für zwischen diesen Stützstellen liegenden Volumenströmen mittels mathematischer Verfahren, z. B. durch Interpolation, bestimmt werden können. Die Korrekturfaktoren werden z. B. derart ermittelt, daß für die Volumenströme jeweils konstante Meßabweichungen erreicht werden. Im Ergebnis wird durch diese Vorgehensweise eine vom Volumenstrom unabhängige konstante Abweichung des geförderten Mediumsvolumen erreicht. Dieses mit einem vom Volumenstrom unabhängigen konstanten Fehler behaftet Mediumsvolumen wird mittels eines volumenstromunabhängigen Korrekturfaktors derart korrigiert, daß der berechnete Näherungswert dem tatsächlich geförderten Mediumsvolumen entspricht. Es ist ebenfalls möglich, die intervallspezifischen Korrekturwerte derart zu bestimmen, daß eine Berechnung anhand dieser Korrekturwerte direkt zu einer korrekten Berechnung des geförderten Mediumsvolumen führt.

Eine weitere Ausführungsform der Erfindung sieht vor, daß der Volumenstrombereich der Zapfanlage in Volumenstromintervalle unterteilt wird und die Abweichung des zwischen dem tatsächlich geförderten Mediumsvolumen und dem berechneten Näherungswert korrigiert wird, indem für jedes Volumenstromintervall ein intervallspezifischer Korrekturfaktor verwendet wird. Auf diese Weise können in der Rechnereinheit für zuvor bestimmte Volumenstromintervalle jeweils ein Korrekturfaktor hinterlegt werden, was in vorteilhafter Weise zu einer Reduzierung der Rechenleistung der Rechnereinheit führt. Die Korrekturfaktoren sind in einer Datenbankstruktur den entsprechenden Volumenstromintervallen zugeordnet. Die Größe der Volumenstromintervalle wird dabei derart ausgewählt, daß eine ausreichende Genauigkeit des berechneten Mediumsvolumens erreicht wird. Durch eine Einteilung des Volumenstrombereichs der Zapfanlage in kleine Volumenstromintervalle wird die erreichbare Berechnungsgenauigkeit des geförderten Volumens erhöht. Da in der Rechnereinheit eine begrenzte Anzahl bereits vorbestimmter Korrekturfaktoren hinterlegt ist, wird durch diese Weiterbildung des erfindungsgemäßen Verfahrens in vorteilhafter Weise die von der Rechnereinheit zu erbringende Rechenleistung minimiert, da eine Berechnung der Korrekturfaktoren in Abhängigkeit vom jeweils vorliegenden Volumenstrom während der Förderung des Mediums in Echtzeit nicht notwendig ist.

Nach einer besonders vorteilhaften Ausführungsform der Erfindung wird als Korrekturfaktor ein Mittelwert von anhand mehrerer Eichmessungen einer Vielzahl von Meßeinheiten bestimmter Korrekturfaktoren verwendet. Diese vorteilhafte Ausführungsform des Verfahrens nutzt die Tatsache, daß die Relation zwischen der volumenstromspezifischen Abweichung einer Meßeinheit und dem vorliegenden Volumenstrom für die Meßeinheit charakteristisch ist. Vergleicht man Fehlerkurven von verschiedenen Meßeinheiten, so stellt man fest, daß ein systematischer Fehler von etwa gleichbleibender Größe mit gleichem Vorzeichen auftritt. Diese systematischen Fehler werden durch eine entsprechende Korrektur ausgeglichen. Zu diesem Zweck werden mehrere Meßeinheiten im Rahmen einer Vorprüfung vermessen und die bei dieser Vermessung ermittelten Fehlerkurven statistisch ausgewertet. Bei dieser Auswertung können die mittleren Abweichungen der Fehlerkurven vom Sollwert bestimmt werden. Für die bestimmten mittleren Abweichungen der Fehlerkurven werden dann für bestimmte Volumenströme die zugehörigen Korrekturfaktoren bestimmt. Diese Volumenströme bilden Stützstellen aus, so daß für zwischen diesen Stützstellen vorliegende Volumenströme die entsprechenden Korrekturfaktoren mittels mathematischer Verfahren bestimmt werden können. Auf diese Weise wird ein vom jeweils vorliegenden Volumenstrom unabhängiges, gegebenenfalls mit einem konstanten Fehler behaftetes Mediumsvolumen berechnet. In vorteilhafter Weise muß bei dieser Weiterbildung des Verfahrens die verwendete Meßeinheit im Rahmen der Vorprüfung nicht vollständig ihren gesamten Volumenstrombereich vermessen werden. Da der für die Meßeinheit systematische Verlauf der Fehlerkurve durch die zuvor beschriebene Vorgehensweise derart korrigiert wurde, daß unabhängig vom jeweils vorliegenden Volumenstrom eine konstante Abweichung vorliegt, genügt es im Rahmen der Vorprüfung diesen konstanten Fehler zu bestimmen und einen entsprechenden volumenstromunabhängigen Korrekturfaktor in der Rechnereinheit zu hinterlegen, der zusammen mit den zuvor bestimmten Korrekturfaktoren bei der Berechnung der Mediumsmenge verwendet wird.

Nach weiteren vorteilhaften Ausführungsformen der Erfindung handelt es sich bei der verwendeten Meßeinheit um einen Kolbenmesser oder einen Spindelmesser. Dabei ist die Verwendung einer Kolbenmessereinheit gegenüber einer Verwendung einer Spindelmessereinheit bevorzugen, da die Kolbenmessereinheit robuster und unempfindlicher ist und die ihr zugrundeliegende größere Messungsgenauigkeit mittels des erfindungsgemäßen Verfahrens in vorteilhafter Weise einfach und sicher ausgeglichen werden kann.

Vorzugsweise treibt die Meßeinheit einen Impulsgeber an, dessen Impulse an die Rechnereinheit, die die Berechnung des geförderten Mediumsvolumen durchführt, weitergeleitet werden. Die vom Impulsgeber empfangenen Impulse werden in der Rechnereinheit zur Berechnung des Mediumsvolumen verwendet. Anhand der während einer bestimmten Zeiteinheit empfangenen Impulse wird in der Rechnereinheit der während dieser Zeitdauer vorliegende Volumenstrom ermittelt. Die Abgabe eines Impulses durch den Impulsgeber ist mit der Abgabe eines bestimmten Mediumsvolumen gekoppelt. Anhand der von der Rechnereinheit empfangenen Impulse kann somit einerseits ein Rückschluß auf den jeweils vorliegenden Volumenstrom und andererseits auf die gemessene Volumenmenge gezogen werden. Entsprechend der in der Rechnereinheit hinterlegten Zuordnung geförderten Mediums volumenstromspezifischer Korrekturwerte erfolgt eine Berechnung der tatsächlich geförderten Mediumsmenge durch die Rechnereinheit unter Verwendung dieser Korrekturwerte.

Weitere Vorteile und Merkmale der vorliegenden Erfindung ergeben sich aus der nachfolgenden Beschreibung von beispielhaften, nicht beschränkenden Ausführungsformen der Erfindung anhand der Figuren. Dabei zeigt:

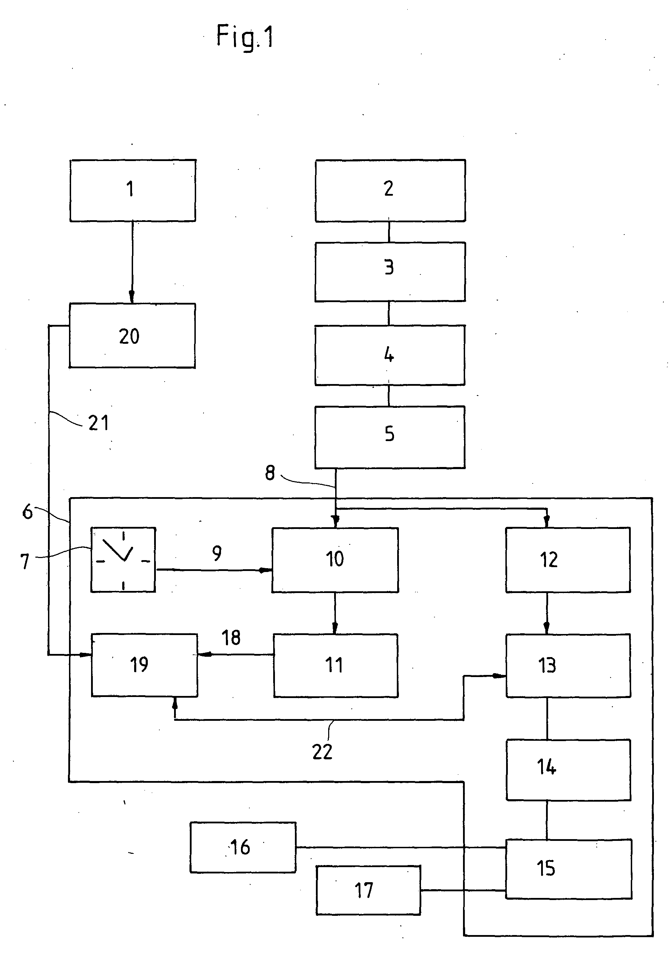

- Fig. 1: einen schematischen Ablaufplan des erfindungsgemäßen Verfahrens.

Die Tankanlage zur Durchführung des erfindungsgemäßen Verfahrens besteht aus einer beliebigen Anzahl von Kraftstofftanks, die mit Kraftstoffleitungen einer ebenfalls beliebigen Anzahl von Zapfsäulen verbunden sind. Jeder der Kraftstoffleitungen kann eine eigene Kraftstoffpumpe zugeordnet sein. Der durch die jeweilige Zapfanlage geförderte Kraftstoff wird durch einen Kolbenmesser geleitet, der für eine Bestimmung des geförderten Kraftstoffvolumens genutzt wird. Der Kolbenmesser treibt in bekannter Weise einen Impulsgeber an, welcher kommunikationstechnisch mit einer vorzugsweise in der Zapfsäule vorgesehenen Rechnereinheit verbunden ist. Die Rechnereinheit 6 dient einer Steuerung sämtlicher Funktionen der Zapfsäule, beispielsweise der Steuerung der Anzeigen des geförderten Kraftstoffvolumens, des zu zahlenden Kaufpreises, des volumenspezifischen Kraftstoffpreises (Betrag pro Liter), der automatischen Abschaltung der Zapfpistole, etc..

Fig. 1 zeigt den Ablauf des erfindungsgemäßen Verfahrens anhand einer beispielhaften Entnahme von Kraftstoff an einer Zapfsäule einer Tankstelle. Vor der eigentlichen Entnahme des Kraftstoffes wird mindestens ein zur Durchführung des erfindungsgemäßen Verfahrens erforderliche Korrekturfaktor KF im Rahmen einer Vorprüfung 1 bestimmt.

Diese Vorprüfung wird durch den Hersteller der Tankanlage vor deren Auslieferung oder während möglicherweise durchgeführter Nacheichungen während eines Einsatzes der Zapfanlage durchgeführt. Die Vorprüfung läuft in einer Form wie folgt ab:

Über den gesamten Volumenstrombereich der Zapfsäule werden in möglichst gleichen Abständen Stützvolumenströme Vₛ₁, Vₛ₂, Vₛ₃, ....., Vₛₙ bestimmt. Unter dem Stützvolumenstrom Vₛ ist das in einer gewissen Zeiteinheit ΔT geförderte Volumen ΔV, d. h. die Ableitung des Volumens nach der Zeit zu verstehen. Für jeden der Stützvolumenströme Vₛ₁ bis Vₛₙ wird ein stützvolumenstromspezifischer Korrekturfaktor KFᵥₛ bestimmt. Der Korrekturfaktor KFᵥₛ wird dabei derart bestimmt, daß das auf Basis der mit dem Kolbenmesser durchgeführten Messung berechnete Volumen für einen bestimmten Volumenstrom dem tatsächlich geförderten Volumen bei diesem Volumenstrom entspricht. Anhand der Korrekturfaktoren KFᵥₛ für die Stützvolumenströme Vₛ wird mittels beliebiger mathematischer Näherungsverfahren eine Relation 20 zwischen dem stützvolumenstromspezifischen Korrekturfaktor KFᵥₛ und dem jeweils vorliegenden Stützvolumenstrom Vₛ bestimmt. Diese Relation 20 wird in einer Datenbankstruktur 19 hinterlegt.

In einer weiteren Form kann die Vorprüfung wie folgt ablaufen:

Durch den Hersteller von Tankanlagen werden mehrere Kolbenmesser einer Vorprüfung unterzogen. Im Rahmen dieser Vorprüfungen werden für jeden Kolbenmesser in der bereits zuvor beschriebenen Weise Stützvolumenströme Vₛ₁, Vₛ₂, Vₛ₃, ..., Vₛₙ bestimmt. Für die Stützvolumenströme Vₛₙ wird die jeweils vorliegende Fehlerabweichung für jeden der geprüften Kolbenmesser bestimmt. Im Ergebnis wird so für jeden Kolbenmesser eine Relation zwischen dessen Fehlerabweichung und dem jeweils vorliegenden Stützvolumenstrom Vₛₙ erhalten. Durch Verwendung beliebiger mathematischer Verfahren besteht die Möglichkeit, aus dieser Relation eine Relation zwischen der Fehlerabweichung jedes der Kolbenmesser und dem Volumenstrom zu berechnen. Anhand der zuvor genannten Relationen wird für die Gesamtheit der im Rahmen der Vorprüfung vermessenen Kolbenmesser eine mittlere Fehlerabweichung bestimmt, anhand der ein mittlerer volumenstromspezifischer Korrekturfaktor KF_{VS} als Funktion des Stützvolumenstroms Vₛₙ bzw. des Volumenstroms Vₛ berechnet wird. Diese Relation wird wie zuvor beschrieben in der Datenbankstruktur 19 hinterlegt.

Im Verfahrensschritt 2 wird ein Zapfvorgang durch einen Nutzer gestartet, in dem dieser die Zapfpistole der Zapfsäule in den Kraftstoffeinfüllstutzen seines Kraftfahrzeugs einführt und betätigt. Die Rechnereinheit 6 stellt diese Betätigung fest und sendet ein entsprechendes Signal an die jeweilige Kraftstoffpumpe, welche im Verfahrensschritt 3 mit der Förderung des Kraftstoffes beginnt. Mit der Bezugsnummer 4 ist angedeutet, daß der der Pumpe zugeordnete Kolbenmesser das Volumen des mittels der Pumpe geförderten und an der Zapfsäule abgegebenen Kraftstoffes mißt. In Abhängigkeit vom geförderten Volumen betätigt der Kolbenmesser einen Impulsgeber, dessen Impulse, wie mit der Bezugsnummer 5 angedeutet ist, an die Rechnereinheit 6 übermittelt werden. In der Rechnereinheit 6 wird anhand von Zeitdaten 9 eine Relation zwischen den während einer bestimmten Zeitspanne vom Impulsgeber empfangenen Impulsen und der Zeit bestimmt, anhand der im Verfahrensschritt 11 der jeweils vorliegende Kraftstoffvolumenstrom Vₛ berechnet wird.

Im Verfahrensschritt 12 wird in der Rechnereinheit 6 anhand der vom Impulsgeber empfangenen Impulse 8 ein mit der Fehlerabweichung des Kolbenmessers behafteter Näherungsvolumenwert Vₙ berechnet. Wie mit der Bezugsnummer 18 angedeutet erfolgt anhand des berechneten und jeweils vorliegenden Volumenstroms Vₛ eine Auswahl des für diesen Volumenstrom Vₛ zu verwendenden Korrekturfaktor KFᵥₛ. Mit der Bezugsnummer 22 ist angedeutet, daß dieser Volumenstrom spezifische Korrekturfaktor KFᵥₛ verwendet wird, um auf Basis des Abweichungsfehler behafteten Näherungsvolumen Vₙ das tatsächlich geförderte und abgegebene Kraftstoffvolumen V zu berechnen. Der berechnete Kraftstoffvolumenwert V wird im Verfahrensschritt 14 zur Berechnung des zu zahlenden Preises genutzt. Die bei der Berechnung des Preises sowie bei der Bestimmung des tatsächlich geförderten Kraftstoffvolumens erhaltenen Daten werden im Verfahrensschritt 15 zur Steuerung der Kraftstoffvolumenanzeige 16 sowie der Preisanzeige 17 verwendet.

### Bezugszeichenliste

- 1: Vorprüfung
- 2: Startzapfvorgang
- 3: Kraftstoffförderung durch Pumpe
- 4: Messung des Kraftstoffvolumens durch Kolbenmesser
- 5: Übermittlung von Meßimpulsen auf Basis des gemessenen Kraftstoffvolumens
- 6: Rechnereinheit
- 7: rechnerinterne Zeitnahme
- 8: Impulsübertragung
- 9: Zeitdaten
- 10: Berechnung der empfangenen Impulse pro Zeit
- 11: Berechnung des Kraftstoffvolumenstroms
- 12: Bestimmung des Abweichungsfehler behafteten Näherungswertes
- 13: Bestimmung des tatsächlich geförderten Kraftstoffvolumens
- 14: Berechnung des zu zahlenden Preises
- 15: Steuerung der Zapfsäulenanzeigen
- 16: Volumenanzeige
- 17: Preisanzeige
- 18: Auswahl des volumenstromspezifischen Korrekturfaktors
- 19: Datenbankstruktur
- 20: Relation zwischen dem volumenstromspezifischen Korrekturfaktor und dem Volumenstrom
- 21: Speicherung der Relation des volumsenstromspezifischen Korrekturfaktors
- 22: Übertragung des jeweils zu verwendenden Korrekturfaktors

## Patentansprüche

1. Verfahren zur Messung von mittels Zapfanlagen geförderter Volumina eines vorzugsweise fluiden Mediums, insbesondere zur Messung von einer Zapfsäule einer Tankstelle entnommener Kraftstoffvolumina, bei dem mit einer eine Meßabweichung aufweisenden Meßeinheit erfaßte Volumendaten einer mittels der Zapfanlage geförderten Mediumsmenge an eine Rechnereinheit geleitet werden, in der anhand dieser Volumendaten ein Näherungswert des geförderten Mediumsvolumen berechnet wird und zum Ausgleich der Abweichung zwischen dem tatsächlich geförderten Mediumsvolumen und dem berechneten Näherungswert dieser mit einem durch eine Eichmessung bestimmten Korrekturfaktor versehen wird,
**dadurch gekennzeichnet, daß**
zur Korrektur der Abweichung zwischen dem tatsächlich geförderten Mediumsvolumen und dem berechneten Näherungswert volumenstromspezifische Korrekturfaktoren in Abhängigkeit vom jeweils vorliegenden Volumenstrom des Mediums verwendet werden.

2. Verfahren nach Anspruch 1, **dadurch gekennzeichnet, daß** die volumenstromspezifischen Korrekturfaktoren bestimmt werden, indem Korrekturfaktoren für willkürlich ausgewählte Volumenströme ermittelt werden und Korrekturfakturen für zwischen den ausgewählten Volumenströmen liegende Volumenströme durch eine Interpolation der für die ausgewählten Volumenströme ermittelten Korrekturfaktoren bestimmt werden.

3. Verfahren nach Anspruch 1 oder 2, **dadurch gekennzeichnet, daß** der Volumenstrombereich der Zapfanlage in Volumenstromintervalle unterteilt wird und die Abweichung zwischen dem tatsächlich geförderten Mediumsvolumen und dem berechneten Näherungswert korrigiert wird, indem für jedes Volumenstromintervall ein intervallspezifischer Korrekturfaktor verwendet wird.

4. Verfahren nach einem der vorhergehenden Ansprüche, **dadurch gekennzeichnet, daß** der Volumenstrombereich der Zapfanlage in mehrere Volumenstromintervalle unterteilt wird und ein für jedes Volumenstromintervall volumenstromspezifischer Korrekturfaktor mit einem volumenstromunabhängigen Korrekturfaktor kombiniert wird.

5. Verfahren nach einem der vorherigen Ansprüche, **dadurch gekennzeichnet, daß** als Korrekturfaktor der Mittelwert von bei Eichmessungen einer Vielzahl von Meßeinheiten bestimmter Korrekturfaktoren verwendet wird.

6. Verfahren nach einem der vorhergehenden Ansprüche, **dadurch gekennzeichnet, daß** die Meßeinheit ein Kolbenmesser ist.

7. Verfahren nach einem der Ansprüche 1 bis 5, **dadurch gekennzeichnet, daß** die Meßeinheit ein Spindelmesser ist.

8. Verfahren nach einem der vorhergehenden Ansprüche, **dadurch gekennzeichnet, daß** die Meßeinheit einen Impulsgeber antreibt.

9. Verfahren nach Anspruch 8, **dadurch gekennzeichnet, daß** die Berechnung des Abgabevolumens mit der Rechnereinheit anhand von dem Impulsgeber an die Rechnereinheit übertragener Impulse erfolgt.

10. Verfahren nach einem der vorhergehenden Ansprüche, **dadurch gekennzeichnet, daß** das Medium mittels einer Pumpe aus einem Tank oder dergleichen durch die Meßeinheit einer Zapfanlage zugeführt wird.

11. Verfahren nach Anspruch 10, **dadurch gekennzeichnet, daß** die Zapfanlage mit wenigstens einer Pumpe für jede Kraftstoffsorte versehen ist, wobei jeder Pumpe mindestens eine Meßeinheit zugeordnet ist.
